# EUROPÄISCHE PATENTSCHRIFT

(11) **EP 2 737 988 B1**
(45) Veröffentlichungstag und Bekanntmachung des Hinweises auf die Patenterteilung: **21.07.2021**
(21) Anmeldenummer: 13180264.7
(22) Anmeldetag: 13.08.2013
(51) Int. Cl.: B29C 48/25, B29C 48/38, B29C 48/67, B29C 48/40, B29C 44/34

(54) **Verfahren zur Schaumextrusion**
Method for foam extrusion
Procédé d'extrusion d'une mousse

(30) Priorität: 30.11.2012 EP 12195183
(43) Veröffentlichungstag der Anmeldung: 04.06.2014
(73) Patentinhaber: Promix Solutions AG, 8406 Winterthur (CH)
(72) Erfinder: Schlummer, Christian, 8400 Winterthur (CH)
(74) Vertreter: Herrmann, Johanna

(56) Entgegenhaltungen:
- EP-A2- 0 463 759
- WO-A1-01/41995
- WO-A1-03/033232
- DE-A1- 10 000 938
- US-A- 4 169 679
- US-A- 4 253 771
- US-A- 4 857 250
- None

## Beschreibung

Die Erfindung betrifft ein Verfahren zur Schaumextrusion mit physikalischen Treibfluiden.

Aufgabe der Erfindung ist es, ein physikalisch geschäumtes Extrudat mit einem Extrusionsverfahren herzustellen, bei dem konventionelle Extruder verwendet werden können. Dabei wird ein konventioneller Extruder um einen Zylinderabschnitt mit Dosiervorrichtung zum Eintrag des physikalischen Treibfluids verlängert. Die Plastifizierschnecke wird ebenfalls verlängert und dient als Mischstrecke für das Treibfluid. Der Zylinderabschnitt kann zusätzlich gekühlt werden und zusätzliche Statische Mischelemente zur Vermischung enthalten.

Die Schaumextrusion ist ein Sonderverfahren der Extrusion, bei dem Treibfluide der Polymerschmelze zudosiert und vermischt werden, um ein geschäumtes Produkt herzustellen. Neben chemischen Treibfluiden werden insbesondere physikalische Treibfluide zum Erzeugen einer zellulären Schaumstruktur verwendet, da diese kostengünstiger sind und keine Rückstände im Polymer bilden. Dabei wird das Treibfluid mit der Polymerschmelze unter hohem Druck in Kontakt gebracht und intensiv vermischt. Das Treibfluid geht mit der Polymerschmelze unter Druck bevorzugt eine einphasige Lösung ein und wird über eine Düse in die gewünschte Form gebracht, z. B. Platte, Folie, Rohr, Profil, Kabel, Schlauch. Beim Extrudieren der mit Treibfluid versetzten Polymerschmelze durch die formgebende Düse expandiert das Treibfluid infolge des Druckabfalls in der Düse und bildet eine zelluläre Schaumstruktur. Die Zunahme der Viskosität durch Abkühlen des expandierenden Polymers führt zu einer Verfestigung der gebildeten Schaumstruktur.

Physikalische Treibfluide werden als hochkomprimierte Gase oder niedrigsiedende Flüssigkeiten unter hohem Druck typischerweise direkt in den Plastifizierzylinder des Extruders zudosiert.

Dokument WO 01/41995 A offenbart ein Verfahren zur Umrüstung eines konventionellen Extruders in einen Schaumextruder zur Herstellung eines geschäumten Extrudates aus einer Polymerschmelze mittels eines physikalischen Treibfluids, wobei der konventionelle Extruder einen Plastifizierzylinder und eine darin drehbare Plastifizierschnecke enthält, wobei die Polymerschmelze in dem Plastifizierzylinder erzeugt wird, wobei der Plastifizierzylinder um einen temperierten Zylinderabschnitt verlängert wird, wobei der temperierte Zylinderabschnitt eine Öffnung aufweist, durch welche das physikalische Treibfluid in die Polymerschmelze eingetragen wird, wobei das physikalische Treibfluid mittels einer verlängerten Plastifizierschnecke in die Polymerschmelze eingemischt wird, wobei die verlängerte Plastifizierschnecke im Inneren des temperierten Zylinderabschnitts angeordnet ist, wobei die verlängerte Plastifizierschnecke mit der drehbaren Plastifizierschnecke rotiert, wobei die verlängerte Plastifizierschnecke Scherelemente und Mischelemente aufweist, sodass der temperierte Zylinderabschnitt eine Mischstrecke für die treibmittelhaltige Polymerschmelze ausbildet, der temperierte Zylinderabschnitt an den bestehenden Plastifizierzylinder angeflanscht wird.

Dokument WO 01/41995 A offenbart einen Schaumextruder zur Herstellung eines geschäumten Extrudats umfassend einen konventionellen Extruder, wobei der konventionelle Extruder einen Plastifizierzylinder und eine darin drehbare Plastifizierschnecke enthält, wobei ein Polymer und Additive durch Rotation der drehbar gelagerten Plastifizierschnecke im beheizten Plastifizierzylinder aufgeschmolzen und stromabwärts förderbar sind, wobei der konventionelle Extruder eine Zylinderverlängerung aufweist, die als ein temperierter Zylinderabschnitt ausgebildet ist, der an den beheizten Plastifizierzylinder angeflanscht ist, wobei der temperierte Zylinderabschnitt eine Öffnung zum Eintrag eines physikalischen Treibfluids enthält, wobei je eine verlängerte Plastifizierschnecke gemeinsam mit der entsprechenden drehbaren Plastifizierschnecke rotierbar ist, wobei die verlängerte Plastifizierschnecke Scherelemente und Mischelemente aufweist und wobei die verlängerte Plastifizierschnecke im Innenraum des temperierten Zylinderabschnitts angeordnet ist.

In EP0430292 A2 ist ein Verfahren beschrieben, bei welchem das Treibfluid mittels eines im Plastifizierzylinder positionierten Injektors in die Schmelze injiziert wird. Weitere Ausführungen dieser Art sind zu finden in US4409165 und EP0417405 A2. US 4169679 beschreibt eine Vorrichtung, bei der das Treibfluid über die Plastifizierzylinderwand zudosiert wird, wobei der Bereich der Plastifizierschnecke nach der Zudosierung mit speziellen Mischelementen bestückt ist, um eine optimale Vermischung des Treibfluids mit der Polymerschmelze zu erreichen. In US4419309, US3482006 und US3444283 sind Anlagenkonzepte offenbart, welche explizit die Schmelzekühlung als Verfahrensschritt der Schaumextrusion aufführen. In Patentschrift US5589519 ist ein Verfahren zur Herstellung vernetzter Polyolefinschäume beschrieben, bei welchem ein Abschnitt des Extruders mittels eines zirkulierenden Temperiermediums gezielt gekühlt wird. US4308352 verweist auf eine analoge Anordnung zur Herstellung von Polysulfonschaum. US3151192 offenbart einen gekühlten Abschnitt des Zylinders einer Extrusionsanlage zur Herstellung von Polystyrol-Schäumen als Alternative zu einer Tandem-Extrusionsanlage. Anlagen dieser Bauart sind seit vielen Jahren im industriellen Einsatz.

Allerdings handelt es sich hierbei um spezielle Schaumextruder, die speziell für diese Anwendung konzipiert sind. Die Länge und Ausstattung des Plastifizierzylinders und die verfahrenstechnische Gestaltung der Plastifizierschnecke sind auf die individuellen Anforderungen des Schaumextrusionsprozesses ausgelegt. Entsprechende Schaumextruder haben typischerweise Plastifizierschnecken mit einem Längen- zu Durchmesserverhältnis von 36 bis 50. Plastifizierschnecken von Schaumextrudern sind zudem typischerweise mit speziellen Misch- und/oder Scherelementen ausgerüstet, um das Treibfluid optimal einzumischen und zu lösen. Zusätzlich wird bei Schaumextrudern in der Regel eine Schmelzekühlung vorgesehen, um die Schmelzefestigkeit zu erhöhen und ein kontrolliertes Aufschäumen zu gewährleisten. Insofern handelt es sich hierbei um Sondermaschinen für die Schaumextrusion.

Ein Nachrüsten konventioneller Extruder für die Verwendung in der Schaumextrusion mit physikalischen Treibfluiden ist zwar grundsätzlich möglich, aber sehr aufwändig und ein technischer Kompromiss, wie in der WO01/41995 A1 beschrieben. Konventionelle Extruder sind verfahrenstechnisch nicht auf die Bedürfnisse der Schaumextrusion mit physikalischen Treibfluiden ausgelegt. So ist die Länge der Plastifizierschnecke in der Regel nicht für die zusätzlichen Aufgaben der Aufnahme und Einmischung von Treibfluiden in die Schmelze vorgesehen. Da eine intensive Schmelzekühlung bei der konventionellen Extrusion ohne Treibfluide nicht erforderlich ist, sind entsprechende Zonen für die Schmelzekühlung nicht vorgesehen. Eine Öffnung für die Injektion des Treibfluids ist nicht berücksichtigt. Als konventioneller Extruder wird typischerweise ein Extruder verstanden, der eine Plastifizierschneckengeometrie aufweist, die nicht zum Schäumen ausgelegt ist und typischerweise eine vergleichsweise kurze Plastifizierschneckenlänge mit einem Längen- zu Durchmesserverhältnis von 20 bis 36 aufweist.

Eine Öffnung zur Aufnahme der im Plastifizierzylinder positionierten Dosierung des Treibfluids lässt sich zum Nachrüsten nicht vor Ort in die gehärteten und zumeist aus Bimetallen aufgebauten Plastifizierzylinder konventioneller Extruder einbringen, wie sie beispielsweise aus der DE 100 00 938 bekannt sind, sodass die Plastifizierzylinder demontiert und in speziellen Werkstätten nachgearbeitet werden müssen. Dies führt zu hohem Umrüstaufwand und langen Ausfallzeiten der Produktionsanlagen. Ferner müssen die bestehenden Plastifizierschnecken beim Nachrüsten durch Plastifizierschnecken mit anderen Schneckengeometrien ausgetauscht werden, welche spezielle Misch- und/oder Scherelemente aufweisen. Da die Plastifizierschneckenlänge jedoch durch die Plastifizierzylinderlänge vorgegeben ist, gehen die zusätzlichen Scher- und Mischelemente zur Vermischung des Treibfluids zu Lasten der Funktionalität der Plastifizierschnecke, da für die Aufgaben Einziehen, Aufschmelzen, Komprimieren und Austragen des Polymers weniger wirksame Schneckenlänge zur Verfügung steht. Beim Nachrüsten konventioneller Extruder kann die meist geforderte Schmelzekühlung bei vorhandenen Plastifizierzylindern entweder gar nicht oder nur mit erheblichem Aufwand realisiert werden. Insofern ist ein Nachrüsten bestehender konventioneller, nicht für das Schäumen konzipierter Extruder sehr aufwändig und ein verfahrenstechnischer Kompromiss.

EP 1892034 A1 beschreibt ein Verfahren, mit welchem ein bestehender, konventioneller Extruder nachgerüstet werden kann. Dabei wird das Treibfluid über eine Fluidinjektionsdüse zudosiert, die im Anschluss an den Plastifizierzylinder montiert ist. Das Vermischen und Einlösen des Treibfluids erfolgt stromabwärts über eine Vielzahl statischer Mischelemente. Bei diesem Verfahren sind zwar keine Eingriffe in die bestehende Plastifizierschnecke und den Plastifizierzylinder notwendig, nachteilig ist aber der grosse Platzbedarf für den Einbau, der hohe Druckverlust durch die Strömungswiderstände im statischen Mischer und die beschränkte Möglichkeit zur Wärmeabfuhr, da die Wärmeaustauschrate in einem Rohrabschnitt mit statischen Mischern geringer ist als in dem ringförmigen Kanal zwischen Schnecke und Zylinderwand.

EP 2138294 A1 löst den Nachteil der beschränkten Wärmeabfuhr durch die Verwendung eines zusätzlichen separaten Schmelzekühlers in Form von statischen Bündelwärmetauschern oder Kühlextrudern. Zusätzliche statische Wärmetauscher haben den Nachteil, dass sie kostenintensiv sind und einen zusätzlichen Druckverlust generieren. Kühlextruder sind als dynamische Wärmetauscher zwar in der Regel druckneutral und sehr wirksam. Die ausgesprochen hohen Investitionssummen rechtfertigen jedoch nicht den Einsatz als Nachrüstlösung. Ferner benötigen sowohl Kühlextruder wie auch statische Wärmetauscher einen zusätzlichen Platzbedarf, der normalerweise nicht vorhanden ist.

Die EP 0463759 A2 beschreibt ein Verfahren zur Herstellung von mit Stickstoff geschäumten Extrudaten, wobei spezielle Rotor-Stator Mischer zum Einsatz kommen, bei denen sowohl der Rotor wie auch der Stator viele Kavitäten aufweisen. Die Herstellung solcher Mischer ist sehr aufwendig und teuer, da nicht nur der Rotor sondern auch der Stator mechanisch bearbeitet, respektive aus zusätzlichen austauschbaren Segmenten aufgebaut werden muss. Da ein mit Kavitäten versehener Stator gegenüber einem innen glatten Plastifizierzylinder einem hohen Verschleiss ausgesetzt ist, resultieren bei solchen Mischern sehr hohe Ersatzteilkosten. Aufgabe der Erfindung ist es ein Verfahren sowie einen Schaumextruder bereitzustellen, bei dem ein physikalisch geschäumtes Extrudat mit einem konventionellen Extruder durch kostengünstige Nachrüstung hergestellt werden kann. Dabei sollen die gemäss dem Stand der Technik bestehenden Nachteile wie hohe Kosten, ungenügende Plasifizierschneckenlänge, lange Umrüstzeiten, hohe zusätzliche Druckverluste, grosser zusätzlicher Platzbedarf und die beschränkten Möglichkeiten zur Wärmeabfuhr vermieden werden.

Die Aufgabe wird durch die Merkmale der unabhängigen Ansprüche 1 und 4 gelöst.

Die verlängerte Plastifizierschnecke weist insbesondere eine Länge auf, die 2 bis 16 mal, bevorzugt 6 bis 12 mal den Innendurchmesser des Zylinderabschnitts beträgt und dient neben der Plastifizieraufgabe als Mischstrecke für das Treibfluid. Insbesondere kann der Zylinderabschnitt einen Doppelmantel aufweisen.

Die Verlängerung der Plastifizierschnecke wird entweder durch Ersatz der bestehenden Plastifizierschnecke durch eine entsprechend längere Plastifizierschnecke oder durch das Anbauen von zusätzlichen Schneckensegmenten an die bestehende Plastifizierschnecke erreicht. Es hat sich gezeigt, dass die Zugabe vom Treibfluid nicht wie beim Stand der Technik im bestehenden konventionellen Extruder erfolgen muss, sondern dass eine Zudosierung im Zylinderabschnitt möglich ist. Dadurch können, wie beschrieben, Kosten und Zeit für die Nachbearbeitung des Plastifizierzylinders gespart werden. Zudem ist es möglich, die Verlängerung der Plastifizierschnecke durch das Anbauen von zusätzlichen Schneckensegmenten an die bestehende Plastifizierschnecke zu erreichen. Bei der Dosierung des Treibfluids in den bestehenden Plastifizierzylinder gemäss Stand der Technik muss die bestehende Plastifzierschnecke voraussichtlich ersetzt werden, da sich die bestehende Schneckengeometrie im Bereich der Zudosierung nicht für die Zugabe eines Treibfluids eignet. Es hat sich auch gezeigt, dass für gute Schaumresultate keine teuren und im Unterhalt aufwendigen Rotor-Stator Mischer eingesetzt werden müssen. Gute Schaumresultate werden dann erreicht, wenn das Treibfluid vor dem Schäumprozess vollständig in der Polymerschmelze gelöst wurde. Neben der guten Dispergierwirkung der Schnecke ist zum guten Lösen des Treibfluids die Verweilzeit des Treibfluids und das Druckniveau von grosser Bedeutung. Es genügt daher den Plastifizierzylinder um einen innen glatten Zylinderabschnitt zu verlängern, da auch bei solchen Installationen das Druckniveau und die Verweilzeit entsprechend für eine gute Lösung des Treibfluids angepasst werden können. Bei der Verlängerung der Plasitizierschnecke kommen im Stand der Technik beschriebene für das Schäumen gängige Schneckengeometrien zum Einsatz, da diese sehr gute Dispergiereigenschaften für das Treibfluid haben.

Auf diese Art und Weise kann ein konventioneller Extruder sehr einfach, kostengünstig und schnell in einen Schaumextruder umgewandelt werden, mit dem vergleichbare geschäumte Extrudate wie mit einem speziellen Schaumextruder mit Zudosierung des Treibfluids über die Plastifizierzylinderwand und einer zum Schäumen ausgelegten Schneckengeometrie erreicht werden können. Die gemäss Stand der Technik bekannten Nachrüstlösungen basierend auf statischen Mischelementen generieren hohe Druckverluste und benötigen sehr viel Einbaulänge. In nachfolgender Tabelle sind die Einbaulängen und Druckverluste von verschiedenen Nachrüstlösungen für die Herstellung einer Polystyrolfolie mit einem Durchsatz von 40 kg/h dargestellt, wobei die Schaumresultate bei allen Lösungen vergleichbar gut waren.

| Nachrüstlösung | Einbaulänge (cm) | Druckverlust (bar) |
|---|---|---|
| Basierend auf statischen Mischelementen (Stand der Technik) | 120 | 110 |
| Erfindungsgemässe Zylinderabschnittverlängerung | 50 | 0 |
| Erfindungsgemässe Zylinderabschnittverlängerung mit zusätzlichem kurzem Statikmischer | 55 | 20 |

Die Ergebnisse zeigen, dass durch die Plastifizierzylinderverlängerung sowie die Verlängerung der Plastifizierschnecke eine überraschende Verkürzung der Einbaulänge sowie eine Reduktion des Druckverlustes erreichbar ist.

Nachfolgend wird die Erfindung genauer erläutert und anhand der Zeichnungen beispielhaft dargestellt. Es zeigen:
Fig.1a das erfindungsgemässe Verfahren der Umrüstung eines konventionellen Extruders mit Zylinderabschnitt mit Kühlung durch Flüssigtemperierung,
Fig.1b das erfindungsgemässe Verfahren der Umrüstung eines konventionellen Extruders mit Zylinderabschnitt mit Kühlung durch Gebläseheizbänder,
Fig. 2 das erfindungsgemässe Verfahren der Umrüstung eines konventionellen Extruders mit Zylinderabschnitt mit Kühlung durch Flüssigtemperierung und zusätzlichen statischen Mischelementen sowie einer Schmelzepumpe.

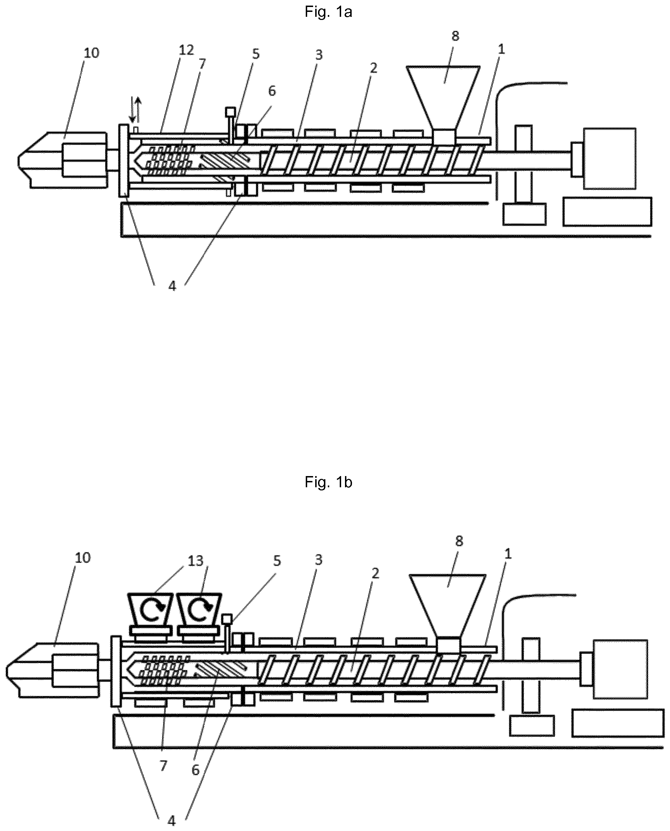

Im konventionellen Extruder (1) gemäss Fig. 1a werden Polymer und Additive durch Rotation der drehbar gelagerten Plastifizierschnecke (2) im beheizten Plastifizierzylinder (3) aufgeschmolzen und stromabwärts gefördert. Dabei übernimmt die Plastifizierschnecke (2) die nachfolgenden Aufgaben: Einziehen des granulat- oder pulverförmigen Polymers aus dem Materialtrichter (8), Aufschmelzen und Komprimieren des Polymers sowie Fördern des Polymers stromabwärts in Extrusionsrichtung. Die Plastifizierschnecke ist als Doppelschnecke ausgeführt.

Der Plastifizierzylinder (3) des konventionellen Extruders wird erfindungsgemäss um einen innen glatten Zylinderabschnitt (4) verlängert, in dem die verlängerte Plastifizierschnecke (2) mitrotiert. Die Verlängerung der Plastifizierschnecke enthält Scherelemente (6) und Mischelemente (7). Das vom konventionellen Extruder (1) aufgeschmolzene Polymer wird stromabwärts in den Zylinderabschnitt (4) gefördert. Über die Öffnung (5) wird der Polymerschmelze ein physikalisches Treibfluid kontrolliert zudosiert. Als Treibfluid können zum Beispiel Kohlendioxid, Stickstoff, Butan, Pentan, Wasser oder Gemische hiervon eingesetzt werden. Die Zudosierung erfolgt vorteilhaft massenstromgeregelt über eine Dosiervorrichtung. Die Öffnung (5) wird vorzugsweise am Anfang, das heisst in den ersten 30% des Zylinderabschnittes vorgesehen, um möglichst viel wirksame Scher- und Mischstrecke zum Mischen des Treibfluids zu nutzen. Vorteilhafterweise wird das Treibfluid in der Polymerschmelze gelöst.

Die Öffnung (5) wird bevorzugt mit einer Absperrvorrichtung versehen, so dass das Treibfluid in die Polymerschmelze einströmen kann, aber keine Polymerschmelze in die Treibfluidzuleitung zurückströmt. Als Absperrvorrichtung eignen sich bevorzugt poröse Membranen oder Rückschlagventile. Durch das Rotieren der stromabwärts der Dosierstelle angeordneten Verlängerung der Plastifizierschnecke mit den vorteilhaft enthaltenen Scherelementen (6) und Mischelementen (7) wird das zudosierte Treibfluid intensiv mit der Polymerschmelze vermischt und gleichzeitig stromabwärts gefördert. In den Scherelementen (6), die vorteilhaft am Anfang des Zylinderabschnittes angebracht sind, wird das Treibfluid bedingt durch hohe Scherkräfte dispersiv in der Polymerschmelze verteilt. Als Scherelement eignet sich bevorzugt eine Schneckengeometrie, bei der die Schmelze zwingend einen definierten Scherspalt überwinden muss. In den Mischelementen (7), die vorteilhaft stromabwärts der Scherelemente (6) angeordnet sind, werden die Polymerschmelze und das Treibfluid intensiv distributiv vermischt. Als Mischelement eignet sich bevorzugt eine Schneckengeometrie mit Stiften oder unterbrochenen Stegen, die am Umfang der Plastifizierschnecke versetzt zueinander angeordnet sind. Die Länge der Verlängerung der Plastifizierschnecke beträgt bevorzugt 2 bis 16 mal den Innendurchmesser des Zylinderabschnitts, besonders bevorzugt 6 bis 12 mal den Innendurchmesser des Zylinderabschnitts.

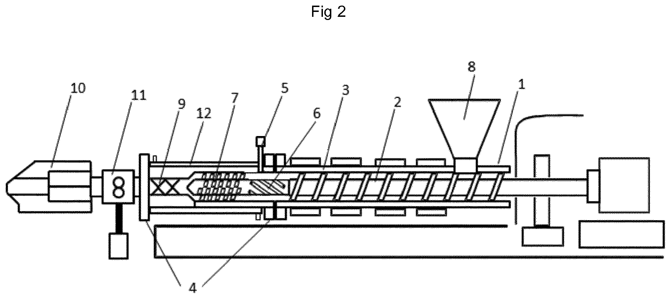

Stromabwärts nach dem Zylinderabschnitt (4) folgt üblicherweise die formgebende Düse (10), wobei wie in Fig. 2 dargestellt zusätzlich eine Schmelzepumpe (11) und / oder weitere Apparate wie Siebwechsler oder Feedblöcke für die Mehrschichtextrusion vorgesehen werden können. Der Einbau einer Schmelzepumpe (11) ist vorteilhaft, da sie ein ausreichendes Druckniveau und einen stabilen Schmelzeaustrag gewährleistet. Beim Extrudieren der mit Treibfluid versetzten Polymerschmelze durch die formgebende Düse expandiert das Treibfluid infolge des Druckabfalls in der Düse und bildet eine zelluläre Schaumstruktur. Je nach Aufgabenstellung können Extrudate mit mehreren Schichten hergestellt werden, wobei mindestens eine Schicht mit dem erfindungsgemässen Verfahren geschäumt wird.

Der Zylinderabschnitt (4) wird temperiert. In einem bevorzugten Ausführungsbeispiel gemäss Fig. 1a und Fig. 2 weist der Zylinderabschnitt einen Doppelmantel (12) zur Flüssigtemperierung auf, um die Schmelzetemperatur abzusenken. Der Raum zwischen Zylinderabschnitt und Mantel wird von einem Wärmeträgermedium durchströmt, welches mit Hilfe eines Temperiergeräts gekühlt wird. In einem anderen Ausführungsbeispiel gemäss Fig. 1b wird der Zylinderabschnitt (4) über Gebläseheizbänder (13) temperiert, die eine Wärmeabfuhr über erzwungene Konvektion ermöglichen. Eine Intensivierung der Kühlung kann über eine Vergrösserung der Wärmeaustauschfläche zwischen Zylinder und Kühlluftstrom beispielsweise durch Kupfer- oder Aluminiumlamellen erreicht werden.

Eine intensive Kühlung des Zylinderabschnittes (4) kann unter Umständen zu thermischen Inhomogenitäten führen, da Schmelzeschichten an der gekühlten Zylinderwand nicht hinreichend mit wärmeren Schichten vermischt werden. In einem vorteilhaften Ausführungsbeispiel gemäss Fig. 2 können daher stromabwärts nach der Plastifizierschneckenverlängerung statische Mischelemente (9) im Schmelzekanal angeordnet werden. Eine vorteilhafte Ausführung der statischen Mischelemente (9) besteht aus sich kreuzenden Stegen, welche die Polymerschmelze durch vielfaches Aufteilen und Umlagern über den ganzen Rohrquerschnitt thermisch vermischt. Zusätzlich werden die Polymerschmelze und das Treibfluid in den statischen Mischelementen (9) weiter vermischt und eingelöst. Die gesamte Länge der statischen Mischelemente (9) beträgt bevorzugt 2 bis 8 mal den Durchmesser der Mischelemente besonders bevorzugt 2 bis 4 mal den Durchmesser der Mischelemente.

## Patentansprüche

1. Verfahren zur Umrüstung eines konventionellen Extruders (1) in einen Schaumextruder zur Herstellung eines geschäumten Extrudates aus einer Polymerschmelze mittels eines physikalischen Treibfluids, wobei der konventionelle Extruder einen Plastifizierzylinder und eine darin drehbare Plastifizierschnecke (2) enthält, wobei die Polymerschmelze in dem Plastifizierzylinder erzeugt wird, wobei der Plastifizierzylinder (3) um einen temperierten Zylinderabschnitt (4) verlängert wird, wobei der temperierte Zylinderabschnitt (4) eine Öffnung (5) aufweist, durch welche das physikalische Treibfluid in die Polymerschmelze eingetragen wird, wobei das physikalische Treibfluid mittels einer verlängerten Plastifizierschnecke (2) in die Polymerschmelze eingemischt wird, wobei die verlängerte Plastifizierschnecke (2) im Inneren des temperierten Zylinderabschnitts (4) angeordnet ist, wobei die Plastifizierschnecke als Doppelschnecke ausgebildet ist, wobei jede verlängerte Plastifizierschnecke (2) der Doppelschnecke mit der entsprechenden drehbaren Plastifizierschnecke (2) der Doppelschnecke rotiert, wobei jede der verlängerten Plastifizierschnecken Scherelemente (6) und Mischelemente (7) aufweist, sodass der temperierte Zylinderabschnitt (4) eine Mischstrecke für die treibmittelhaltige Polymerschmelze ausbildet, wobei der temperierte Zylinderabschnitt (4) innen glatt ist und der temperierte Zylinderabschnitt (4) an den bestehenden Plastifizierzylinder (3) angeflanscht wird.

2. Verfahren nach Anspruch 1, wobei zumindest je ein zusätzliches Schneckensegment an die drehbare Plastifizierschnecke (2) angebaut wird, um die verlängerte Plastifizierschnecke (2) zu erhalten.

3. Verfahren nach einem der vorhergehenden Ansprüche, wobei die Mischelemente (7) stromabwärts der Scherelemente (6) auf der entsprechenden verlängerten Plastifizierschnecke (2) angeordnet sind.

4. Schaumextruder zur Herstellung eines geschäumten Extrudats umfassend einen konventionellen Extruder, wobei der konventionelle Extruder einen Plastifizierzylinder und eine darin drehbare Plastifizierschnecke (2) enthält, wobei die Plastifizierschnecke (2) als Doppelschnecke ausgebildet ist, wobei ein Polymer und Additive durch Rotation der drehbar gelagerten Plastifizierschnecke (2) im beheizten Plastifizierzylinder (3) aufgeschmolzen und stromabwärts förderbar sind, wobei der konventionelle Extruder eine Zylinderverlängerung aufweist, die als ein temperierter, innen glatter Zylinderabschnitt (4) ausgebildet ist, der an den beheizten Plastifizierzylinder (3) angeflanscht ist, wobei der temperierte, innen glatte Zylinderabschnitt (4) eine Öffnung (5) zum Eintrag eines physikalischen Treibfluids enthält, wobei je eine verlängerte Plastifizierschnecke gemeinsam mit der entsprechenden drehbaren Plastifizierschnecke (2) rotierbar ist, wobei die verlängerte Plastifizierschnecke (2) Scherelemente (6) und Mischelemente (7) aufweist und wobei die verlängerte Plastifizierschnecke (2) im Innenraum des temperierten, innen glatten Zylinderabschnitts (4) angeordnet ist.

5. Schaumextruder nach Anspruch 4, wobei die Öffnung (5) am Anfang der Zylinderverlängerung (4) angebracht ist.

6. Schaumextruder nach einem der Ansprüche 4 oder 5, wobei die Öffnung (5) mit einer Absperrvorrichtung versehen ist.

7. Schaumextruder nach einem der Ansprüche 4 bis 6, wobei die verlängerte Plastifizierschnecke (2) eine Länge aufweist, die 2 bis 16-mal dem Innendurchmesser des Zylinderabschnitts (4) entspricht.

8. Schaumextruder nach einem der Ansprüche 4 bis 6, wobei die verlängerte Plastifizierschnecke (2) eine Länge aufweist, die 6 bis 12-mal dem Innendurchmesser des Zylinderabschnitts (4) entspricht.

9. Schaumextruder nach einem der Ansprüche 4 bis 8, wobei der Zylinderabschnitt (4) zusätzlich zumindest ein statisches Mischelement (9) enthält.

10. Schaumextruder nach Anspruch 9, wobei zumindest eines der statischen Mischelemente (9) aus sich kreuzenden Stegen besteht.

11. Schaumextruder nach einem der Ansprüche 4 bis 10, wobei der Zylinderabschnitt (4) einen Doppelmantel (12) aufweist.

12. Schaumextruder nach einem der Ansprüche 4 bis 11, wobei die verlängerte Plastifizierschnecke (2) aus der bestehenden Plastifizierschnecke und zusätzlichen Schneckensegmenten, die an die bestehende Plastifizierschnecke angebaut sind, erhältlich ist.

13. Schaumextruder nach einem der Ansprüche 4 bis 12, wobei die Mischelemente (7) stromabwärts der Scherelemente (6) auf der entsprechenden verlängerten Plastifizierschnecke (2) angeordnet sind.

14. Schaumextruder nach einem der Ansprüche 4 bis 13, wobei die gesamte Länge der statischen Mischelemente 2- bis 8-mal dem Durchmesser der Mischelemente entspricht.

15. Schaumextruder nach einem der Ansprüche 4 bis 14, wobei stromabwärts nach dem innen glatten Zylinderabschnitt (4) eine formgebende Düse (10) angeordnet ist, wobei zusätzlich eine Schmelzepumpe (11) zwischen dem innen glatten Zylinderabschnitt (4) und der formgebenden Düse (10) angeordnet sein kann.

## Claims

1. A method for converting a conventional extruder (1) into a foam extruder for producing a foamed extrudate from a polymer melt by means of a physical blowing fluid, the conventional extruder containing a plasticizing cylinder and a plasticizing screw (2) which can be rotated therein, wherein the polymer melt is generated in the plasticizing cylinder, wherein the plasticizing cylinder (3) is extended by a tempered cylinder section (4), wherein the tempered cylinder section (4) has an opening (5) through which the physical blowing fluid is introduced into the polymer melt, wherein the physical blowing fluid is mixed by means of an extended plasticizing screw (2) into the polymer melt, the extended plasticizing screw (2) being arranged in the interior of the tempered cylinder section (4), wherein the plasticizing screw is configured as a twin screw, wherein each of the extended plasticizing screws (2) of the twin screw rotate with the corresponding rotatable plasticizing screw (2) of the twin screw, wherein each of the extended plasticizing screws is provided with shear elements (6) and mixing elements (7), such that the temperature-controlled cylinder section (4) forms a mixing section for the polymer melt containing blowing agent, wherein the tempered cylinder section (4) is smooth on the inside and the tempered cylinder section (4) is flanged to the existing plasticizing cylinder (3).

2. The method of claim 1, wherein at least one additional screw segment is attached to the rotatable plasticizing screw (2) in order to obtain the extended plasticizing screw (2).

3. The method of one of the preceding claims, wherein the mixing elements (7) are arranged downstream of the shear elements (6) on the corresponding extended plasticizing screw (2).

4. A foam extruder for producing a foamed extrudate comprising a conventional extruder, the conventional extruder comprising a plasticizing cylinder and a plasticizing screw (2) rotatable therein, wherein the plasticizing screw (2) is configured as a twin screw, wherein a polymer and additives can be melted in the heated plasticizing cylinder (3) and conveyed downstream by rotating the rotatably mounted plasticizing screw (2), wherein the conventional extruder is provided with a cylinder extension which is designed as a tempered, internally smooth cylinder section (4) which is flanged onto the heated plasticizing cylinder (3), wherein the tempered, internally smooth cylinder section (4) contains an opening (5) for the introduction of a physical blowing fluid, whereby each one of the extended plasticizing screws is rotatable together with the corresponding rotatable plasticizing screw (2), wherein the extended plasticizing screw (2) is provided with shear elements (6) and mixing elements (7) and wherein the extended plasticizing screw (2) is arranged in the interior of the tempered, internally smooth cylinder section (4).

5. The foam extruder of claim 4, wherein the opening (5) is arranged at the inlet of the cylinder extension (4).

6. The foam extruder of one of claims 4 or 5, wherein the opening (5) is provided with a shut-off device.

7. The foam extruder of one of claims 4 to 6, wherein the extended plasticizing screw (2) has a length which corresponds to 2 to 16 times the inner diameter of the cylinder section (4).

8. The foam extruder of one of claims 4 to 6, wherein the extended plasticizing screw (2) has a length which corresponds to 6 to 12 times the inner diameter of the cylinder section (4).

9. The foam extruder of one of claims 4 to 8, wherein the cylinder section (4) additionally contains at least one static mixing element (9).

10. The foam extruder of claim 9, wherein at least one of the static mixing elements (9) consists of crosswise arranged web elements.

11. The foam extruder of one of claims 4 to 10, wherein the cylinder section (4) is provided with a double jacket (12).

12. The foam extruder of one of claims 4 to 11, wherein the extended plasticizing screw (2) is obtainable by attaching additional screw segments to the existing plasticizing screw.

13. The foam extruder of one of claims 4 to 12, wherein the mixing elements (7) are arranged downstream of the shear elements (6) on the corresponding extended plasticizing screw (2).

14. The foam extruder of one of claims 4 to 13, wherein the total length of the static mixing elements corresponds to 2 to 8 times the diameter of the mixing elements.

15. The foam extruder of one of claims 4 to 14, wherein a shaping nozzle (10) is arranged downstream of the internally smooth cylinder section (4), wherein in addition a melt pump (11) can be arranged between the internally smooth cylinder section (4) and the shaping nozzle (10).

## Revendications

1. Procédé de conversion d'une extrudeuse conventionnelle (1) en une extrudeuse de mousse pour produire un extrudat expansé à partir d'une masse fondue de polymère au moyen d'un agent d'expansion physique, l'extrudeuse conventionnelle contenant un cylindre de plastification et une vis de plastification (2) qui peuvent y être tournées, la masse fondue de polymère se produisant dans le cylindre de plastification, en ce que le cylindre de plastification (3) est prolongé par une section de cylindre trempée (4), la section de cylindre trempée (4) ayant une ouverture (5) à travers laquelle l'agent d'expansion physique est introduit dans la masse fondue de polymère, l'agent d'expansion physique étant mélangé dans la masse fondue de polymère par la vis de plastification étendue (2), la vis de plastification étendue (2) étant disposée à l'intérieur de la section de cylindre trempé (4), la vis de plastification étant conçue comme une vis jumelle, en ce que chaque vis de plastification étendue (2) de la vis jumelle tourne avec la vis de plastification rotative correspondante (2) de la vis jumelle et chacune des vis de plastification étendues ayant des éléments de cisaillement (6) et des éléments de mélange (7), de sorte que la section de cylindre trempée (4) forme une section de mélange pour le polymère fondu contenant l'agent d'expansion, en ce que la section de cylindre trempée (4)) est lisse à l'intérieur et la section de cylindre trempée (4) est bridée sur le cylindre de plastification existant (3).

2. Le procédé selon la revendication 1, dans lequel au moins un segment de vis supplémentaire est fixé à la vis de plastification rotative (2) pour obtenir la vis de plastification étendue (2).

3. Le procédé selon l'une quelconque des revendications précédentes, dans lequel les éléments de mélange (7) sont disposés en aval des éléments de cisaillement (6) sur la vis de plastification étendue correspondante (2).

4. Une extrudeuse de mousse pour produire un extrudat de mousse comprenant une extrudeuse conventionnelle, l'extrudeuse conventionnelle comprenant un cylindre de plastification et une vis de plastification rotative (2) arrangé à l'intérieur, dans laquelle la vis de plastification (2) est conçue comme une vis jumelle, dans laquelle un polymère et des additifs peuvent être fondés et transportés en aval en faisant tourner la vis de plastification (2) dans le cylindre de plastification chauffé (3) et en ce que l'extrudeuse conventionnelle ayant une extension de cylindre qui est conçue comme une section intérieure de cylindre trempée et lisse (4) qui est bridée sur le cylindre de plastification chauffé (3), en ce que la section de cylindre trempée (4) est lisse à l'intérieur et contient une ouverture (5) pour l'introduction d'un agent d'expansion physique, en ce qu'une vis de plastification étendue peut tourner avec la vis de plastification rotative correspondante (2), en ce que la vis de plastification étendue (2) est pourvue avec des éléments de cisaillement (6) et des éléments de mélange (7) et en ce que la vis de plastification étendue (2) est disposée à l'intérieur de la section intérieure du cylindre lisse et trempée (4).

5. L'extrudeuse de mousse selon la revendication 4, dans laquelle l'ouverture (5) est disposée au début de l'extension de cylindre (4).

6. L'extrudeuse de mousse selon l'une des revendications 4 ou 5, dans laquelle l'ouverture (5) est pourvue d'un dispositif d'obturation.

7. L'extrudeuse de mousse selon l'une des revendications 4 à 6, dans laquelle la vis de plastification étendue (2) a une longueur qui correspond de 2 à 16 fois du diamètre intérieur de la section de cylindre (4).

8. L'extrudeuse de mousse selon l'une des revendications 4 à 6, dans laquelle la vis de plastification étendue (2) a une longueur qui correspond de 6 à 12 fois du diamètre intérieur de la section de cylindre (4).

9. L'extrudeuse de mousse selon l'une des revendications 4 à 8, dans laquelle la section de cylindre (4) contient en outre au moins un élément de mélange statique (9).

10. L'extrudeuse de mousse selon la revendication 9, dans laquelle au moins l'un des éléments de mélange statiques (9) est constitué des éléments ailettes croisés.

11. L'extrudeuse de mousse selon l'une des revendications 4 à 10, dans laquelle la section de cylindre (4) est pourvue d'une double enceinte enveloppante (12).

12. L'extrudeuse de mousse selon l'une des revendications 4 à 11, dans laquelle la vis de plastification étendue (2) est constituée de la vis de plastification existante et des segments de vis supplémentaires, qui sont fixés sur la vis de plastification existante.

13. L'extrudeuse de mousse selon l'une des revendications 4 à 12, dans laquelle les éléments de mélange (7) sont disposés en aval des éléments de cisaillement (6) sur la vis de plastification étendue correspondante (2).

14. L'extrudeuse de mousse selon l'une des revendications 4 à 13, dans laquelle la longueur totale des éléments de mélange statiques correspond de 2 à 8 fois du diamètre des éléments de mélange.

15. L'extrudeuse de mousse selon l'une des revendications 4 à 14, dans laquelle une buse de façonnage (10) est disposée en aval de la section intérieure de cylindre lisse (4), dans laquelle en outre une pompe de fusion (11) peut être disposée entre la section intérieure de cylindre lisse (4) et la buse de façonnage (10).
